# EUROPEAN PATENT APPLICATION

(11) **EP 1 526 117 A1**
(43) Date of publication of application: **27.04.2005**
(21) Application number: 04024693.6
(22) Date of filing: 15.10.2004
(51) Int. Cl.: C02F 1/42, C02F 103/08

(54) **A process to reduce the content of Sodium in brackish waters and equipment thereof**

(30) Priority: 21.10.2003 IT mi20030103
(71) Applicant: Verdi S.r.l., 42024 Castelnovo di Sotto (Reggio Emilia) (IT)
(72) Inventor: Passaglia, Elio, 42024 Castelnovo di Sotto Reggio Emilia (IT); Poppi, Stefano, 42024 Castelnovo di Sotto Reggio Emilia (IT); Azzolini, Pietro Giovanni, 42024 Castelnovo di Sotto Reggio Emilia (IT)
(74) Representative: Lecce, Giovanni

(57) **Abstract**

A process to reduce the content of Sodium (Na) in brackish waters by treatment with a cation exchange material and subsequent regeneration of said exhausted material by a regenerating solution wherein the exchange material is natural zeolite.

## Description

The present invention refers to a process to reduce the content of Sodium in brackish waters and equipment thereof.

More particularly, the present invention refers to a process to reduce the content of Sodium in brackish waters to be used for agronomic irrigation.

The equipment to carry out the process is also integral part of the present invention.

As known, the irrigation of the ground of many intensive farming areas can be prejudiced or even impossible due to the high content of Sodium (Na) in the irrigation water available (water sheets, springs, channels, etc.).

Object of the present invention is to remove this drawback.

More particularly, object of the present invention is to provide a process to reduce the content of Sodium in waters available for irrigation, thus making them suitable for this purpose.

According to the present invention, these and other purposes, which will result from the following description are obtained by a process which consists in treating brackish waters with a cation exchange material and in the subsequent regeneration of said exhausted material by a regenerating solution wherein the cation exchange material is natural zeolitite.

The advantages obtained by the process of the present invention consist in that with a moderate investment which can be amortized in a short term, targeted equipments can be realized both for quality of treatment and for quantity of treated water, for any plot of land which would otherwise be prejudiced by the harmful effects due to the presence of high concentrations of Sodium in the irrigation waters.

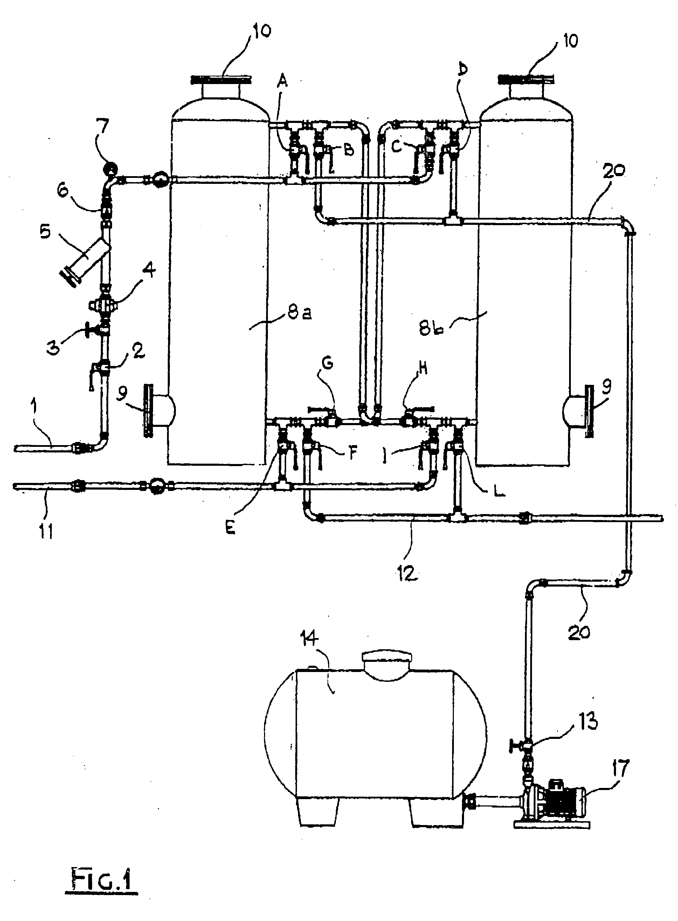

The process of the present invention is described in detail here below wherein reference is made to an equipment which is given only by way of example and non-limiting the present invention, with reference to Figure 1 of the attached drawing representing the scheme of an equipment embodiment with double exchange column.

The equipment is designed to develop a water treatment in exchange column with regeneration of the exhausted column by means of various ionic solutions. With this type of treatment all waters which are generally defined as "brackish" can be treated.

Each exchange column, in a selected and defined granulometry, is created inside a vertically developed container, for example a cylindrical one, made of metal or plastic material. The natural cation exchanger is constituted by zeolitite which when it is directly taken from the pit, shows a variable hygroscopic humidity level from 20 to 30% according to seasons. In order to allow sieving, the zeolitite is dried in oven, at about 180°C for example, is riddled in a granulometry comprised between 0.2 and 0.7 mm with a content in powder which is not higher than 2% by weight and purified.

In particular the zeolitite for this specific use has the following chemical-mineralogical features:
a) qualitative-quantitative mineralogical composition in % by weight:
   chabazite: 60 +/- 10; phillipsite: 5+/-3; k-feldspate: 13 +/-5;
   plagioclase: 3 +/-2; augite 2 +/-1; mica 5+/-3; volcanic glass: 12 +/-8.
b) Qualitative-quantitative chemical composition: in % by weight:
   SiO₂: 52 +/- 4; Al₂O₃: 17 +/-2; TiO₂: 0.5 +/- 0.1;
   Fe₂O₃: 3.6 +/- 1; P₂O₅: 0.3 +/- 0.3; MnO: 0.2 +/-0.2;
   MgO: 2.0 +/-0.5; CaO 5.7 +/- 1.0; Na₂O: 0.6 +/- 0.4;
   K₂O: 6.1 +/-0.8; H₂O: 12.0 +/- 3.0.
c) cation exchange capacity: determined with a 1N solution of NH₄Cl:
   2.2 +/- 0.3 mEq/g of which 1.3 +/-0.2 due to Calcium;
   0.8 +/- 0.06 due to Potassium; 0.05 +/- 0.02 due to Sodium and 0.05 +/- 0.02 due to Magnesium.

The zeolitite can be in the form of zeolitized tuff, a rock rich in zeolite, natural zeolite, sedimentary zeolite and other known form.

The cation excangher, having the specific granulometry, forms the exchange column which is introduced into the vertically developed containers of variable sizes according to the company requirements concerning the quantities of irrigation water needed to the surface to be watered and according to the reduction of the optimum content of Na for the phenologic needs of the culture.

Said vertically developed containers are provided with conventional accessories, control and adjustment devices to carry out:
a) the treatment of the brackish waters;
b) the regeneration of the exhausted exchange column.

Here below, an example of equipment which is also subject matter of the present invention is described. The equipment is shown in Figure 1 and comprises two vertically developed containers 8a and 8b with exchange columns which can work in parallel or alternately, one during the water treatment and the other as a spare container or during the regeneration of its exchange column.

It is therefore clear that the equipments can comprise only one or more containers.

Each container 8a and 8b comprises a lower waste stack 9 of the exchange column and an upper filler 10 to load the same column.

Through at least one inlet pipe 1, the brackish water to be treated, coming from a well or a channel, is sent into and in the upper part of the containers 8a and 8b and dropped on the cation exchange material granule surface making the exchange columns. On the inlet pipe 1 there are: a shut-off valve 2, a control valve 3 for the entrance of the water to be treated, a static/dynamic pressure regulator 4, a filter 5, a check valve 6 and a pressure gauge 7.

Water to be treated is introduced into the containers 8a and 8b with a flow rate allowing a controlled percolation, preferably constant, according to the reduction of Na to be obtained. By way of example, and with reference to testings carried out, for exchange columns having a variable capacity up to about 500 kg, the percolation rate of the water in treatment is kept constant between a minimum of 7 l/min. and a maximum of 15 l/min. with a treated volume of 10-20 m³ in about 20 hours.

The active phase of reduction of the Sodium content in waters can be extended until the saturation of the exchange column takes place i.e. when the concentration in Sodium of the outlet water substantially approaches the inlet one.

The regeneration phase is then carried out. It consists in sending inside and in the upper part of the same containers 8a and 8b a volume of ionic regenerating solution which, during percolation, removes, by cation exchange, the Sodium accumulated into the exchange columns during the treatment phase. By way of non-limitative example, this regenerating solution can be of about 1/10 of the total volume of treated water.

For this phase, the equipment is provided with at least one reservoir 14 containing the regenerating solution, which is connected to the upper part of the containers 8a and 8b through a pipe 20 with a shut-off valve 13 and at least one delivery pump 17.

The ionic regenerating solution is substantially constituted by an Ammonium (NH₄)⁺ or Potassium K⁺ or Calcium Ca⁺⁺ chloride or sulphate solution.

The openings/closings of the various pipe connections are handled by a series of A-L valves, according to the operation phases which are taking place: the reduction treatment of the Sodium content and the regeneration of the exhausted exchange column.

In their lower part, the containers 8a and 8b are equipped with outlet pipes 11 of the treated water towards storage basins and with drain pipes 12 of the regenerating solution.

In case of regenerations with K and Ca solutions, the resulting waste waters, for their content in salts, can be drained directly into the surface pipeline network in compliance with the current provisions.

In case of regeneration with a solution of (NH₄)⁺, the waste waters for their N-ammoniac content, is purified by treatment on the zeolitic bed until a content of (NH₄)⁺ is obtained, before draining, according to the law limits.

After repeated purification and regeneration phases, the zeolitic material used for the purpose shows a reduction in efficiency that can be considered as "exhausted". The material is therefore replaced with similar fresh material and the exhausted mass is drained through the waste stacks 9. Due to its well known corrective properties, this material can be spread on the agricultural land.

The process of the present invention has been described above with reference to an equipment given only by way of illustrative example. It is therefore clear that layout, shape and configuration changes and variations of the components can be made within the spirit and the scope of the following claims.

## Claims

1. A process to reduce the content of Sodium (Na) in brackish waters by treatment with a cation exchange material and subsequent regeneration of said exhausted material by a regenerating solution, **characterized in that** the exchange material is natural zeolitite.

2. The process according to claim 1, **characterized in that** the natural zeolitite is dried and riddled in a granulometry comprised between 0.2 and 0.7 mm with a content in powder which is not higher than 2% by weight.

3. The process according to claim 1 or 2, **characterized in that** the natural zeolitite has the following mineralogical and chemical-physical features:
- qualitative-quantitative mineralogical composition in % by weight:
chabazite: 60 +/- 10; phillipsite: 5+/-3; k-feldspate: 13 +/-5;
plagioclase: 3 +/-2; augite 2 +/-1; mica 5+/-3;
volcanic glass: 12 +/-8;
- qualitative-quantitative chemical composition in % by weight:
SiO₂: 52 +/- 4; Al₂O₃: 17 +/-2; TiO₂: 0.5 +/- 0.1;
Fe₂O₃: 3.6 +/- 1; P₂O₅: 0.3 +/- 0.3; MnO: 0.2 +/- 0.2;
MgO: 2.0 +/-0.5; CaO 5.7 +/- 1.0; Na₂O: 0.6 +/- 0.4;
K₂O: 6.1 +/-0.8; H₂O: 12.0 +/- 3.0
- cation exchange capacity, determined with 1N solution of NH₄Cl,:
2.2 +/- 0.3 mEq/g of which 1.3 +/-0.2 due to Calcium; 0.8 +/- 0.06 due to Potassium; 0.05 +/- 0.02 due to Sodium and 0.05 +/- 0.02 due to Magnesium.

4. The process according to anyone of the previous claims, **characterized in that** the zeolitite is zeolitized tuff.

5. The process according to anyone of the previous claims from 1 to 3, **characterized in that** the zeolitite is a rock rich in zeolite.

6. The process according to anyone of the previous claims from 1 to 3, **characterized in that** the zeolitite is natural zeolite.

7. The process according to anyone of the previous claims, from 1 to 3, **characterized in that** the zeolitite is a sedimentary zeolite.

8. The process according to anyone of the previous claims, **characterized in that** the regenerating solution is constituted by Ammonium, Potassium and/or Calcium chlorides or sulphates.

9. An equipment to reduce the content of Sodium (Na) in brackish waters by treatment with a cation exchange material and subsequent regeneration of said exhausted material by a regenerating solution, said equipment comprising:
- at least one container (8a, 8b) containing a column of the cation exchange material, comprising un upper part and a lower part;
- means (1-7) to feed the brackish water to be treated into the upper part of said at least one container (8a, 8b) and to percolate said water through said column;
- a reservoir (14) containing a regenerating solution;
- means (13, 17, 20) to feed said regenerating solution to the upper part of said at least one container (8a, 8b) and to percolate this regenerating solution through said column; and
- means (11) to drain the treated water and means (12) to drain the regenerating solution both connected to the lower part of at least one container (8a, 8b);
**characterized in that** the cation exchange material is natural zeolitite.

10. The equipment according to claim 9, **characterized in that** the container (8a, 8b) containing a column of the cation exchange material is vertically developed and is provided with at least one lower waste stack (9) of the exhausted cation exchange columns and with an upper filler of the fresh cation exchange columns.
